# EUROPEAN PATENT APPLICATION

(11) **EP 4 700 932 A1**
(43) Date of publication of application: **25.02.2026**
(21) Application number: 23934032.6
(22) Date of filing: 19.04.2023
(51) Int. Cl.: H01M 50/178, H01M 50/184, H01M 50/193, H01M 50/197

(54) **SEALING FILM, ELECTRODE LEAD WIRE MEMBER, AND BATTERY**

(71) Applicant: ZACROS Corporation, Tokyo 112-0002 (JP)
(72) Inventor: TAKEYAMA Shunsuke, Tokyo 112-0002 (JP); SAKURAGI Takanori, Tokyo 112-0002 (JP); MEGURO Atsufumi, Tokyo 112-0002 (JP); SHIMIZU Takashi, Tokyo 112-0002 (JP)
(74) Representative: Lavoix
(86) International application number: PCT/JP2023/015573
(87) International publication number: WO 2024/218886

(57) **Abstract**

Disclosed is a sealing film for sealing between a metal first base body and a second base body, wherein the sealing film includes a first adhesive layer that adheres to the first base body, a second adhesive layer that adheres to the second base body, and a base material layer provided between the first adhesive layer and the second adhesive layer, the first adhesive layer mainly contains an acid-modified polyolefin, and the sealing film contains an epoxy resin-based compound.

## Description

### TECHNICAL FIELD

The present invention relates to a sealing film, an electrode lead wire element, and a battery.

### BACKGROUND ART

In recent years, as storage batteries for storing electrical energy, secondary batteries such as lithium ion batteries, and capacitors have been attracting attention. For example, such a battery includes a battery cell, a housing for enclosing the battery cell, and an electrode lead wire connected to the battery cell. The housing is manufactured using a laminated body for battery exterior packaging which has excellent waterproof and light shielding properties. The laminated body for battery exterior packaging is, for example, a laminated body in which a base material layer made of polyamide or the like and aluminum foil are laminated. The electrode lead wire is sealed in the housing in a state in which a portion including one end of the electrode lead wire is drawn from the housing to the outside.

In the above-described battery, when water enters the housing, the water may react with components in an electrolytic solution, producing hydrogen fluoride. The hydrogen fluoride may deteriorate the electrode lead wire and affect battery lifetime. For this reason, it has been proposed to interpose a film for sealing (a resin film) between the housing and the electrode lead wire (see, for example, Patent Document 1).

The film for sealing bonds the electrode lead wire and the housing together, and prevents a gap from being formed between the housing and the electrode lead wire. This prevents water from entering the housing from the outside through the gap.

### Citation List

### Patent Document

Patent Document 1: Japanese Unexamined Patent Application, First Publication No. 2017-73200

### SUMMARY OF INVENTION

### Technical Problem

It is preferable that the film for sealing (hereinafter referred to as a sealing film) has high adhesive strength to the electrode lead wire. In addition, since the sealing film may come into contact with the electrolytic solution in the housing, electrolytic solution resistance is required.

The present invention has been made in consideration of the above-described circumstances, and an object of the present invention is to provide a sealing film that has high adhesive strength to an electrode lead wire and resistance to an electrolytic solution, as well as to provide an electrode lead wire element and a battery.

### Solution to Problem

In order to solve the above-described problems, one aspect of the present invention includes the following aspects.
[1] A sealing film for sealing between a metal first base body and a second base body, wherein the sealing film comprises: a first adhesive layer that adheres to the first base body; a second adhesive layer that adheres to the second base body; and a base material layer provided between the first adhesive layer and the second adhesive layer, wherein the first adhesive layer mainly contains an acid-modified polyolefin, and the sealing film contains an epoxy resin-type compound.
[2] The sealing film according to [1], wherein a content of the epoxy resin-type compound on the basis of the total resin amount of the sealing film is 0.05 mass % or more and 6 mass % or less.
[3] The sealing film according to [1] or [2], wherein the first adhesive layer contains an epoxy resin-type compound.
[4] The sealing film according to any one of [1] to [3], wherein the first adhesive layer contains the epoxy resin-type compound in an amount of 0.1 mass % or more and 10 mass % or less on the basis of the total resin amount of the first adhesive layer.
[5] The sealing film according to any one of [1] to [4], wherein the second adhesive layer contains an acid-modified polyolefin and an epoxy resin-type compound.
[6] The sealing film according to any one of [1] to [5], wherein the base material layer contains a polyolefin and an epoxy resin-type compound.
[7] The sealing film according to any one of [1] to [6], wherein the first adhesive layer contains an acid-modified polypropylene and an epoxy resin-type compound, the base material layer contains polypropylene, and the second adhesive layer contains polypropylene or an acid-modified polypropylene.
[8] An electrode lead wire element comprising: the sealing film as defined in any one of [1] to [7]; and the first base body, which is an electrode lead wire extending in one direction.
[9] A battery comprising: the electrode lead wire element as defined in [8]; a battery cell to which the electrode lead wire is connected; and the second base body, which is a housing enclosing the battery cell.

### Advantageous Effects of Invention

According to one aspect of the present invention, it is possible to provide a sealing film having high adhesive strength to an electrode lead wire and resistance to an electrolytic solution, as well as to provide an electrode lead wire element and a battery.

### BRIEF DESCRIPTION OF DRAWINGS

[FIG. 1] A schematic cross-sectional view showing a sealing film of one embodiment.
[FIG. 2] A schematic perspective view showing an electrode lead wire element of one embodiment.
[FIG. 3] A schematic perspective view showing a battery according to the embodiment.
[FIG. 4] A cross-sectional view along line I-I in FIG. 3.

### DESCRIPTION OF EMBODIMENTS

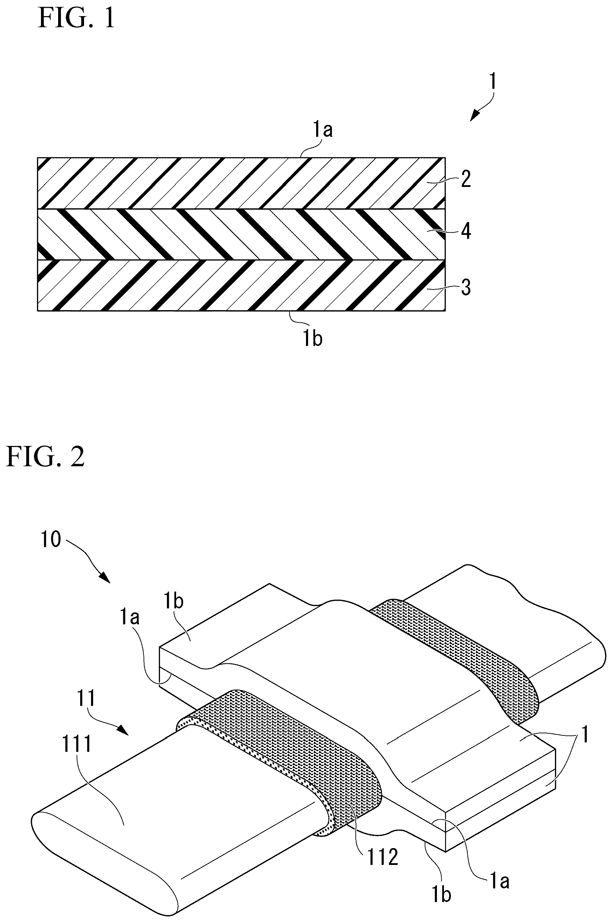

Hereinafter, a sealing film, an electrode lead wire element, and a battery according to an embodiment are described with reference to FIGS. 1 to 4. In addition, the dimensions, ratios, and the like of components in the drawings may differ from the actual ones.

### <Sealing film>

The present embodiment relates to a sealing film that seals between a metal first base body and a second base body.

FIG. 1 is a schematic cross-sectional view of a sealing film 1 of one embodiment.

As shown in FIG. 1, the sealing film 1 is a laminated body in which a first adhesive layer 2, a base material layer 4, and a second adhesive layer 3 are laminated in this order.

The first adhesive layer 2 is an adhesive layer that adheres to the first base body made of metal. The metal first base body is, for example, an electrode lead wire which is a component of the battery.

The second adhesive layer 3 is an adhesive layer that adheres to the second base body. The second base body is, for example, a component of the battery and is a housing that encloses a battery cell.

The base material layer 4 is provided between the first adhesive layer 2 and the second adhesive layer 3.

FIG. 2 is a schematic perspective view showing an electrode lead wire element 10 of one embodiment.

As shown in FIG. 2, the electrode lead wire element 10 includes an electrode lead wire 11 and the sealing film 1. The electrode lead wire 11 is an example of the "first base body."

The sealing film 1 contains an epoxy resin-type compound. The epoxy resin-based compound is described in detail below.

A content of the epoxy resin-type compound is preferably 0.05 mass % or more and 6 mass % or less on the basis of the total resin amount of the sealing film 1.

An example of the "content of the epoxy resin-type compound on the basis of the total resin amount of the sealing film" is a content of the epoxy resin-type compound on the basis of the total resin amount of the first adhesive layer, the base material layer, and the second adhesive layer.

The content of the epoxy resin-type compound contained in the sealing film 1 can be measured by a known method such as FT-IR, GC-MS, or pyrolysis GC-MS.

Hereinafter, the layers constituting the sealing film 1 are described.

### [First adhesive layer]

The first adhesive layer 2 is a layer that is fused (adheres) to the first base body by application of heat and pressure. A surface of the first adhesive layer 2 is one surface 1a of the sealing film 1. The first adhesive layer 2 is a resin layer that contains a resin.

The first adhesive layer 2 mainly contains an acid-modified polyolefin. The expression "the first adhesive layer 2 mainly contains an acid-modified polyolefin" means that the acid-modified polyolefin has the highest content among the resin component(s) constituting the first adhesive layer 2.

The first adhesive layer 2 preferably contains the acid-modified polyolefin in an amount of 50 mass % or more, more preferably more than 50 mass %, and even more preferably 80 mass % or more, on the basis of the total amount of the first adhesive layer 2.

Examples of the polyolefin forming the first adhesive layer 2 include polypropylene, polyethylene, poly-1-butene, polyisobutylene, and the like. Among these, polypropylene is preferred for its excellent flexibility. Hereinafter, polypropylene may be abbreviated as "PP."

The polyolefin may be a copolymer of propylene and ethylene (a propylene-ethylene copolymer). In particular, a random copolymer of propylene and ethylene is preferred. The polyolefin may be a copolymer of propylene and an olefin-type monomer. Examples of the olefin-type monomer include 1-butene, isobutylene, 1-hexene, and the like.

The acid-modified polyolefin is a polyolefin-based resin modified with unsaturated carboxylic acids or derivatives thereof, which has an acid functional group, such as a carboxy group or a carboxylic acid anhydride group, in the polyolefin-based resin. The acid-modified polyolefin can be obtained by modifying the polyolefin-based resin with unsaturated carboxylic acids or derivatives thereof, or by copolymerizing an acid functional group-containing monomer with olefins, and the like. Use of the acid-modified polyolefin can enhance the adhesion of the first adhesive layer 2 to the electrode lead wire 11 (see FIG. 2).

As the acid-modified polyolefin, an acid-modified polypropylene (acid-modified PP) is preferred because of its excellent heat resistance. For example, the acid-modified PP is a polymer obtained by graft-copolymerizing a monomer having a carboxy group to polypropylene or a propylene-ethylene copolymer. Examples of the monomer having a carboxy group include: unsaturated carboxylic acids such as acrylic acid and methacrylic acid; unsaturated carboxylic acid esters such as ethyl acrylate; acid anhydrides such as maleic anhydride, and the like.

The acid-modified PP encompasses an ionomer in which a carboxylic acid group of an acid-modified polymer of polypropylene or an acid-modified polymer of a propylene-ethylene copolymer is neutralized with a metal hydroxide, an alkoxide, a salt of a lower fatty acid, or the like.

The acid group of the acid-modified PP is preferably a maleic anhydride group. That is, the acid-modified PP is preferably a maleic anhydride-modified PP.

The first adhesive layer 2 preferably contains an epoxy resin-based compound. A content of the epoxy resin-based compound on the basis of the total amount of the resin forming the first adhesive layer 2 is preferably 0.1 mass % or more and 10 mass % or less.

When the content of the epoxy resin-based compound is not less than the above-described lower limit, the acid functional group of the acid-modified polyolefin and functional groups (an epoxy group and a hydroxyl group) of the epoxy resin-based compound contained in the first adhesive layer 2 can both provide adhesive strength to the metal first base body. As a result, even in a case in which the first adhesive layer 2 comes into contact with the electrolytic solution, it is possible to maintain the adhesive strength of the first adhesive layer 2 to the metal lead wire which is the metal first base body.

When the content of the epoxy resin-based compound is not more than the above-described upper limit, the first adhesive layer 2 can easily have a uniform thickness when simultaneous multi-layer extrusion molding is performed, which facilitates the efficient manufacture of a multi-layer film.

A melting point of the resin forming the first adhesive layer 2 is preferably 110 °C or higher and 150 °C or lower.

When the melting point of the resin forming the first adhesive layer 2 is 110 °C or higher, excessive thinning of the first adhesive layer 2 is suppressed during heat sealing, and thus the adhesive strength is easily ensured. When the melting point of the resin forming the first adhesive layer 2 is 150°C or lower, the resin easily flows during heat sealing, allowing it to sufficiently wrap around the electrode lead wire 11, facilitating the sealing of the entire circumference of the electrode lead wire 11.

In a case in which the "resin forming the first adhesive layer 2" is a polymer alloy of two or more types of resins, the "melting point of the resin forming the first adhesive layer 2" means the melting point of the polymer alloy that forms the first adhesive layer 2.

In the first adhesive layer 2, examples of optional components other than the polyolefin include known additives such as a stabilizer, an antistatic agent, and a colorant.

On the basis of the total thickness of the sealing film 1 as 100, a thickness of the first adhesive layer 2 relative to the total thickness of the sealing film 1 is preferably 25 or more and 70 or less. That is, the thickness of the first adhesive layer 2 is preferably 25% or more and 70% or less on the basis of the total thickness of the sealing film 1. On the basis of the total thickness of the sealing film 1 as 100, a proportion of the thickness of a layer relative to the total thickness of the sealing film 1 is referred to as a "thickness ratio."

When the thickness ratio of the first adhesive layer 2 is 25 or more, the adhesive strength between the first adhesive layer 2 and the electrode lead wire 11 can be sufficiently ensured. When the thickness ratio of the first adhesive layer 2 is 70 or less, a sufficient thickness can be provided for both the second adhesive layer 3 and the base material layer 4. As a result, the electrolytic solution resistance of the sealing film 1 is not impaired, and the adhesive strength between the second adhesive layer 3 and the housing can be increased. The "electrolytic solution resistance" refers to resistance to the electrolytic solution.

### [Epoxy resin-based compound]

The epoxy resin-based compound used in the present embodiment is a compound having two or more epoxy groups in one molecule.

The epoxy resin-based compound may be a compound having two or more epoxy groups in one molecule, which is produced by epoxidizing a polymer, such as by glycidylation.

Examples of the polymer include polyhydroxy polyether, polyhydroxy polyester, polyhydroxy polycarbonate, polyhydroxy polyamide, and the like.

A specific example of the epoxy resin-based compound is a phenoxy resin synthesized by reacting bisphenols with epichlorohydrin.

More specifically, the epoxy resin-based compound may be one having epoxy groups at both ends and represented by the following general formula (1).

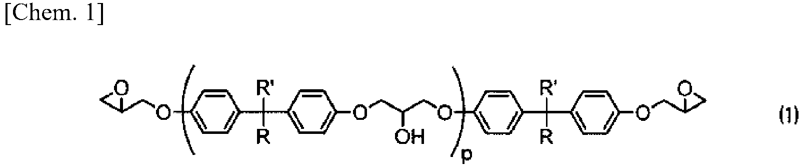

In the general formula (1), substituents R and R' may independently be a hydrogen atom or an alkyl group such as a methyl group or an ethyl group, and the like.

Examples of the phenoxy resin in the general formula (1) include:
a bisphenol A (BPA) type phenoxy resin in which the substituents R and R' of the bisphenols are both CH₃;
a bisphenol F (BPF) type phenoxy resin in which R and R' are both H;
a BPA/BPF copolymer type phenoxy resin in which a bisphenol A type and a bisphenol F type are copolymerized;
a bisphenol B type phenoxy resin in which one of R and R' is CH₃ and the other is H, and the like.

The weight average molecular weight (Mw) of the phenoxy resin or the epoxy resin is preferably about 3,000 or more, and examples thereof include about 15,000 and about 20,000, and the like. Furthermore, the phenoxy resin or the epoxy resin having a higher molecular weight can also be used.

The upper limit of the weight average molecular weight of the phenoxy resin or the epoxy resin is not particularly limited, but is preferably about 80,000.

When the weight average molecular weight of the phenoxy resin or the epoxy resin is measured by GPC, for example, tetrahydrofuran (THF) is used as an eluent for GPC.

The weight average molecular weight can be measured using a column of TSKgel G4000H and TSKgel G3000H (both trade names manufactured by Tosoh Corporation) connected in series.

Phenoxy resins such as those manufactured by Nippon Steel Chemical Co., Ltd., can be used, including those with the following trade names:
YP-50 (Mw: 60,000 to 80,000, BPA type, hydroxyl group number p: about 210 to 280);
YP-50S (Mw: 50,000 to 70,000, BPA type, hydroxyl group number p: about 175 to 245);
YP-55U (Mw: 40,000 to 45,000, BPA type, hydroxyl group number p: about 140 to 160);
YP-70 (Mw: 50,000 to 60,000, BPA/BPF copolymer type);
ZX-1356-2 (Mw: 60,000 to 80,000, BPA/BPF copolymer type);
FX-316 (Mw: 40,000 to 60,000, BPF type), and the like.

In addition, as the phenoxy resin, those manufactured by Mitsubishi Chemical Corporation, can be used, including the following:
a phenoxy type grade 1256 (molecular weight approximately 50,000, BPA type);
a phenoxy type grade 4250 (molecular weight approximately 60,000, BPA/BPF copolymer type);
a phenoxy type grade 4275 (molecular weight approximately 60,000, BPA/BPF copolymer type);
1255HX30;
YX8100BH30;
YX6954BH30, and the like .

In addition, as the phenoxy resin, those manufactured by Tomoe Engineering Co., Ltd., such as PKHB, PKHC, PKHH, PKHJ, and the like, can be used.

In addition, as the epoxy resin, those manufactured by Nippon Steel Chemical Co., Ltd., such as the trade name YD-020G (epoxy equivalent: 3500 to 4500, BPA type), and the like, can be used.

In addition, as the epoxy resin, those manufactured by Mitsubishi Chemical Corporation, including: Grade 1010 (average molecular weight: 5500, BPA type, epoxy equivalent: 3000 to 5000); Grade 1009 (average molecular weight: 3800, BPA type, epoxy equivalent: 2400 to 3300), and the like, can be used.

The epoxy resin-based compound is preferably a novolac type epoxy resin. Specific examples of the epoxy resin-based compound include: a phenol novolac epoxy resin synthesized by reacting a phenol novolac with epichlorohydrin; and a cresol novolac epoxy resin synthesized by reacting O-cresol novolac with epichlorohydrin.

Commercially available epoxy resins include the following examples:
Bisphenol A-type novolac epoxy resins:
   Manufactured by Mitsubishi Chemical Corporation : jER157S70
   Manufactured by DIC Corporation: EPICLON N-865, N-885
Cresol novolac epoxy resins:
   Manufactured by DIC Corporation: EPICLON N-670, N-673, N-680, N-690, N-695
Phenol novolac epoxy resins:
   Manufactured by DIC Corporation: N-770, N-775, and the like.

In the present embodiment, the epoxy resin-based compound preferably contains a compound having a bisphenol A structure in the molecule.

### [Second adhesive layer]

The second adhesive layer 3 is a layer that is fused (adheres) to the second base body by application of heat and pressure, for example. The second base body is, for example, a housing (described below). The surface of the second adhesive layer 3 is the other surface 1b of the sealing film 1. The second adhesive layer 3 is a resin layer that contains a resin.

The resin forming the second adhesive layer 3 may be a resin mainly containing a polyolefin.

The resin forming the second adhesive layer 3 is preferably a resin containing an acid-modified polyolefin and an epoxy resin-based compound.

The second adhesive layer 3 mainly contains a polyolefin. The expression "the second adhesive layer 3 mainly contains a polyolefin" means that the polyolefin has the highest content among the resin components constituting the second adhesive layer 3. The second adhesive layer 3 preferably contains the polyolefin in an amount of 50 mass % or more, more preferably more than 50 mass %, and even more preferably 80 mass % or more, on the basis of the total amount of the second adhesive layer 3.

Examples of the polyolefin forming the second adhesive layer 3 include polypropylene (PP), polyethylene, poly-1-butene, polyisobutylene, and the like. Among these, the PP is preferred for its excellent flexibility.

The polyolefin may be a copolymer of propylene and ethylene (a propylene-ethylene copolymer). In particular, a random copolymer of propylene and ethylene is preferred. The polyolefin may also be a copolymer (for example, a random copolymer) of propylene and an olefin-type monomer. Examples of the olefin-type monomer include 1-butene, isobutylene, 1-hexene, and the like.

The polyolefin forming the second adhesive layer 3 may be an acid-modified polyolefin. As the acid-modified polyolefin, an acid-modified PP is preferred because of its excellent heat resistance. The acid-modified PP exemplified above as a material for the first adhesive layer 2 can be suitably used. A polymer obtained by modifying a random copolymer of propylene and ethylene with an acid is preferably used as the acid-modified PP because of its excellent flexibility. Use of the acid-modified polyolefin can enhance the adhesion of the second adhesive layer 3 to the housing.

The second adhesive layer 3 may contain both an acid-modified PP and an acid-modified polyethylene. When the second adhesive layer 3 contains both an acid-modified PP and an acid-modified polyethylene, a melting point of the second adhesive layer 3 can be lowered and a heating temperature when fusing the second adhesive layer 3 can be reduced, thereby suppressing deterioration of the first adhesive layer 2.

The second adhesive layer 3 may contain the above-described epoxy resin-based compound.

In the present embodiment, a content of the epoxy resin-based compound relative to a total amount of the resin forming the second adhesive layer 3 is preferably 0.1 mass % or more and 10 mass % or less.

When the content of the epoxy resin-based compound is not less than the above-described lower limit, functional groups (an epoxy group and a hydroxyl group) of the epoxy resin-based compound contained in the second adhesive layer 3 can provide adhesive strength to the second base body. As a result, even when the second adhesive layer 3 comes into contact with the electrolytic solution, the strength of the second adhesive layer 3 to the second base body can be maintained.

When the content of the epoxy resin-based compound is not more than the above-described upper limit, the second adhesive layer 3 can easily have a uniform thickness. As a result, even when the second adhesive layer 3 comes into contact with the electrolytic solution, liquid leakage is suppressed.

A melting point of the resin forming the second adhesive layer 3 is preferably 110 °C or higher and 150 °C or lower.

When the melting point of the resin forming the second adhesive layer 3 is 110 °C or higher, excessive thinning of the second adhesive layer 3 during heat sealing is suppressed, and thus the adhesive strength is easily ensured. When the melting point of the resin forming the second adhesive layer 3 is 150°C or lower, the resin easily flows during heat sealing, facilitating the sealing between the housing and the electrode lead wire 11.

In a case in which the "resin forming the second adhesive layer 3" is a polymer alloy of two or more types of resins, the "melting point of the resin forming the second adhesive layer 3" means the melting point of the polymer alloy forming the second adhesive layer 3.

In the second adhesive layer 3, examples of optional components other than the acid-modified polyolefin include known additives such as a stabilizer, an antistatic agent, and a colorant.

When a total thickness of the sealing film 1 is 100, a thickness of the second adhesive layer 3 relative to the total thickness of the sealing film 1 (a thickness ratio of the second adhesive layer 3) is preferably 5 or more and 50 or less. That is, the thickness of the second adhesive layer 3 is preferably 5% or more and 50% or less relative to the total thickness of the sealing film 1.

When the thickness ratio of the second adhesive layer 3 is 5 or more, the adhesive strength between the second adhesive layer 3 and the housing can be sufficiently ensured. When the thickness ratio of the second adhesive layer 3 is 50 or less, a sufficient thickness can be provided for both the first adhesive layer 2 and the base material layer 4. As a result, the electrolytic solution resistance of the sealing film 1 is not impaired, and the adhesive strength between the first adhesive layer 2 and the electrode lead wire 11 can be increased.

### [Base material layer]

The base material layer 4 is provided between the first adhesive layer 2 and the second adhesive layer 3. The base material layer 4 is a resin layer that contains a resin.

The base material layer 4 mainly contains a polyolefin, for example. The expression "the base material layer 4 mainly contains a polyolefin" means that, the polyolefin has the highest content among the resin components constituting the base material layer 4. The base material layer 4 preferably contains the polyolefin in an amount of 50 mass % or more, more preferably more than 50 mass %, and even more preferably 80 mass % or more, relative to the total amount of the base material layer 4.

Examples of the polyolefin forming the base material layer 4 include polypropylene (PP), polyethylene, poly-1-butene, polyisobutylene, and the like. Among these, the PP is preferred for its excellent flexibility.

The polyolefin forming the base material layer 4 may be a homopolymer of one type of olefin or a copolymer of two or more types of olefins. The homopolymer may be a homopolymer of propylene only (homo PP). The copolymer may be a copolymer of propylene and an olefin-type monomer (such as ethylene, 1-butene, isobutylene, or 1-hexene, and the like), for example, a propylene-ethylene copolymer.

The polyolefin forming the base material layer 4 is preferably an impact copolymer (ICP). The ICP has a phase-separated structure such as an islands-in-a-sea structure, having a first phase and a second phase. The islands-in-a-sea structure is one in which a plurality of second phases ("islands") are dispersed in the first phase ("sea.")

The first phase is formed of a homopolymer of an olefin-based monomer such as propylene or ethylene. The second phase is formed of a polymer different from the homopolymer of the first phase. The second phase includes a polymer of an olefin-type monomer (e.g., propylene or ethylene), such as ethylene propylene rubber (EPR). The second phase is constituted by a main phase and a surface layer covering its surface, for example. The main phase is formed of, for example, polyethylene. The surface layer is formed of, for example, EPR.

The ICP in which the homopolymer forming the first phase is the homo PP is called a polypropylene ICP or a polypropylene dispersion element. The ICP in which the homopolymer forming the first phase is the homo PP is so-called block PP. The ICP is also called heterophasic copolymers or block copolymers.

The constituent material of the base material layer is not particularly limited, but a resin (for example, a fluororesin such as polychlorotrifluoroethylene) other than the polyolefin may be used.

The base material layer 4 may contain the above-described epoxy resin-based compound.

In the present embodiment, a content of the epoxy resin-based compound relative to a total amount of the resin forming the base material layer 4 is preferably 0.1 mass % or more and 10 mass % or less.

When the content of the epoxy resin-based compound is not less than the above-described lower limit, functional groups (an epoxy group and a hydroxyl group) of the epoxy resin-based compound contained in the base material layer 4 can provide adhesive strength to the first base body or the second base body. As a result, even when the base material layer 4 comes into contact with the electrolytic solution, the adhesive strength of the base material layer 4 to the first base body or the second base body can be maintained.

When the content of the epoxy resin-based compound is not more than the above-described upper limit, the base material layer 4 can easily have a uniform thickness. As a result, even when the base material layer 4 comes into contact with the electrolytic solution, liquid leakage is suppressed.

When a total thickness of the sealing film 1 is 100, a thickness of the base material layer 4 relative to the total thickness of the sealing film 1 (a thickness ratio of the base material layer 4) is preferably 25 or more and 70 or less. That is, the thickness of the base material layer 4 is preferably 25% or more and 70% or less relative to the total thickness of the sealing film 1.

When the thickness ratio of the base material layer 4 is 25 or more, the electrolytic solution resistance of the sealing film 1 can be sufficiently ensured. In addition, when the thickness ratio of the base material layer 4 is 25 or more, excessive fluidity of the resin is suppressed, while the necessary fluidity is easily achieved during compression bonding.

When the thickness ratio of the base material layer 4 is 70 or less, a sufficient thickness can be provided for both the first adhesive layer 2 and the second adhesive layer 3. As a result, the adhesive strength between the first adhesive layer 2 and the electrode lead wire 11, and the adhesive strength between the second adhesive layer 3 and the housing can be increased. Furthermore, the fluidity of the resin is maintained, ensuring the fluidity of the resin during heat sealing within an appropriate range.

A melting point of the resin forming the base material layer 4 is preferably 150 °C or higher and 170 °C or lower.

When the melting point of the resin forming the base material layer 4 is 150 °C or higher, the sealing film 1 can easily ensure electrolytic solution resistance . Furthermore, heat resistance can be imparted to the sealing film 1.

When the melting point of the resin forming the base material layer 4 is 170 °C or lower, flexibility can be imparted to the sealing film 1. As a result, the generation of gaps is suppressed between the electrode lead wire 11 and the sealing film 1, or between the housing and the sealing film 1, or both.

A melting point M4 of the resin forming the base material layer 4 is higher than a melting point M2 of the resin forming the first adhesive layer 2 or a melting point M3 of the resin forming the second adhesive layer 3. That is, the melting point M4 is higher than the melting point M2 or the melting point M3. It is desirable that the melting point M4 be higher than both the melting point M2 and the melting point M3. In other words, it is desirable that the melting point M4 be higher than at least one of the melting points M2 and the melting point M3.

When the melting point M4 is higher than the melting point M2, the electrolytic solution resistance of the sealing film 1 can be easily ensured while maintaining the adhesive strength between the first adhesive layer 2 and the electrode lead wire 11. When the melting point M4 is higher than the melting point M3, the electrolytic solution resistance of the sealing film 1 can be easily ensured while maintaining the adhesive strength between the second adhesive layer 3 and the housing.

Furthermore, a melting point M4 higher than the melting point M2 or the melting point M3 brings the advantage that the heat resistance can be easily imparted to the sealing film 1.

In the sealing film of the present embodiment, preferably, the first adhesive layer contains the acid-modified polypropylene and the epoxy resin-based compound, the base material layer contains polypropylene, and the second adhesive layer contains polypropylene or the acid-modified polypropylene.

The above-described combination of the first adhesive layer, the base material layer, and the second adhesive layer facilitates obtaining a sealing film having high adhesive strength to the electrode lead wire and electrolytic solution resistance.

### <Electrode lead wire element >

As shown in FIG. 2, the electrode lead wire element 10 includes the electrode lead wire 11 and a pair of sealing films 1.

The pair of sealing films 1 are disposed so that their first adhesive layers 2 face each other. The electrode lead wire 11 is sandwiched between the pair of sealing films 1. The pair of sealing films 1 are in contact with regions corresponding to one surface and the other surface of the electrode lead wire 11, respectively. As a result, the pair of sealing films 1 are in contact with the entire circumferential portion of the electrode lead wire 11 as a whole.

The electrode lead wire 11 comprises a lead wire main body 111 and a surface treatment layer 112. The electrode lead wire 11 extends linearly in one direction. The electrode lead wire 11 is made of metal.

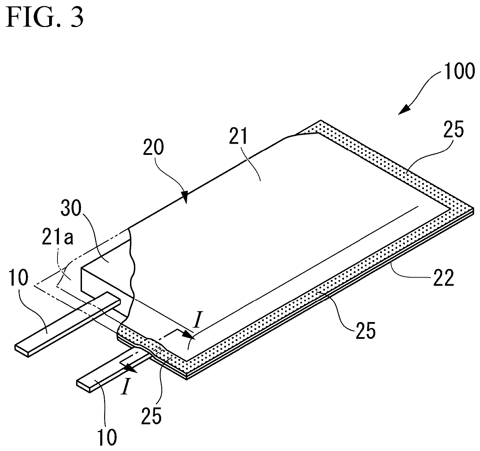

The electrode lead wire 11 has conductivity. The electrode lead wire 11 is electrically connected to a lithium ion battery 30 (see FIG. 3). Through the electrode lead wire 11, the lithium ion battery 30 is electrically connected to an external device.

Known metals such as aluminum, copper, nickel, iron, gold, platinum, and various alloys can be used as a material of the lead wire main body 111. Among these, aluminum and copper are preferred because these metals have excellent electrical conductivity and are advantageous in cost.

A surface of the lead wire main body 111 may be nickel plated. The nickel plating of the lead wire main body 111 may be formed by electroplating using a Watts bath containing nickel sulfate, nickel chloride, boric acid, and the like as main components. The nickel plating of the lead wire main body 111 is preferably performed using a nickel sulfamate plating bath containing nickel sulfamate and boric acid as main components. A plating film formed by this method has excellent flexibility and is less likely to crack.

The lead wire main body 111 is preferably an aluminum plate or a nickel-plated copper plate.

The surface treatment layer 112 is formed on the surface of the lead wire main body 111. The surface treatment layer 112 has corrosion resistance. The "corrosion resistance" refers to the property of being less susceptible to corrosion by the electrolytic solution inside the battery. For example, The surface treatment layer 112 may be an acid-resistant film formed of a material such as a phosphate, a chromate, a fluoride, or a triazine thiol compound. The acid-resistant film can be formed by subjecting the lead wire main body 111 to a chemical conversion treatment.

In FIG. 2, the surface treatment layer 112 is formed on a portion of the surface of the lead wire main body 111, but the surface treatment layer 112 may be formed on the entire region of the surface of the lead wire main body 111. The electrode lead wire may not have the surface treatment layer formed thereon.

Since the configurations of the first adhesive layer 2, the base material layer 4, and the second adhesive layer 3 of the sealing film 1 are within the above-described ranges, the sealing film 1 has good adhesive strength to the electrode lead wire 11 and resistance to the electrolytic solution. The sealing film 1 has good adhesive strength to the electrode lead wire 11, and thus it is possible to prevent water from entering the housing from the outside. Since the sealing film 1 has resistance to the electrolytic solution, it is possible to realize a battery 100 which is less likely to deteriorate and is highly reliable.

The sealing film 1 contains the acid-modified polyolefin as a material for forming the first adhesive layer 2. As a result, the first adhesive layer 2 is easily heat-fused to the electrode lead wire 11, and an interface between the electrode lead wire 11 and the sealing film 1 can be sealed. Consequently, it is possible to prevent water from entering the housing from the outside.

The sealing film 1 contains the acid-modified polyolefin as a material for forming the second adhesive layer 3. As a result, the second adhesive layer 3 is easily heat-fused to the resin material forming the housing of the battery and easily seals the interface between the housing and the sealing film 1.

The electrode lead wire element 10 comprises the sealing film 1, and thus it is possible to prevent water from entering the housing from the outside.

### <Battery>

FIG. 3 is a schematic perspective view showing a battery 100 according to the embodiment.

As shown in FIG. 3, the battery 100 comprises the electrode lead wire element 10, the housing 20, and the lithium ion battery 30 (the battery cell) which are described above.

The housing 20 includes a container main body 21 and a lid 22. The housing 20 is an example of the "second base body."

The container main body 21 has a molded portion 21a in which a recess for enclosing the lithium ion battery 30 is formed. The container main body 21 is obtained by draw-forming a laminated body for battery exterior packaging. The lid 22 is made of the laminated body for battery exterior packaging and has the same area in a plan view as the container main body 21. The laminated body for battery exterior packaging is described below.

The housing 20 is formed by overlapping the container main body 21 and the lid 22 and heat sealing a peripheral portion 25.

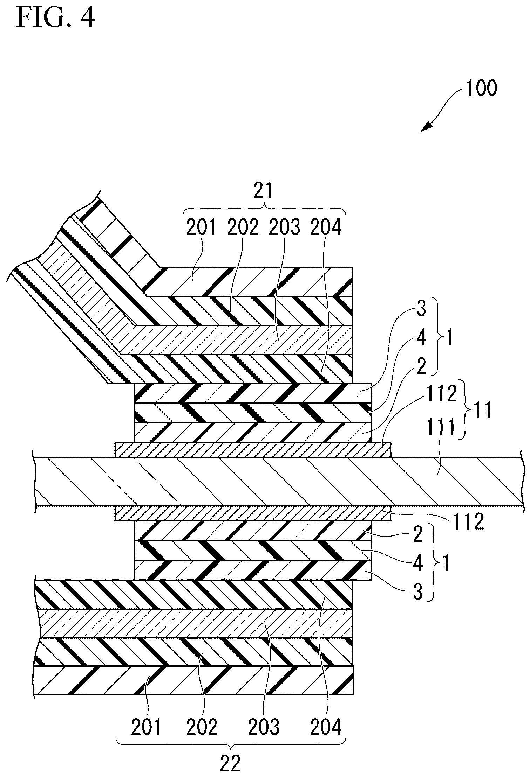

FIG. 4 is a cross-sectional view along line I-I in FIG. 3.

As shown in FIG. 4, the laminated body for battery exterior packaging, which is the constituent material of the container main body 21 and the lid 22, comprises a first film base material 201, a second film base material 202, metal foil 203, and a sealant layer 204 laminated in this order.

A resin forming the first film base material 201 and the second film base material 202 is not particularly limited, and polyamide, polyethylene terephthalate (PET), a phenolic resin, polypropylene, and the like are preferable therefor.

The metal foil 203 is preferably aluminum foil, stainless steel foil, copper foil, iron foil, or the like.

The sealant layer 204 is in contact with the second adhesive layer 3 of the sealing film 1 and is heat-fused thereto. As a resin forming the sealant layer 204, a resin capable of being fused to the sealing film 1 is selected. Examples of the resin forming the sealant layer 204 include a polypropylene-based resin and a polyethylene-based resin. A homopolymer of polypropylene, a copolymer of propylene and ethylene, or the like can be used as the polypropylene-based resin. As the polyethylene-based resin, low-density polyethylene, linear low-density polyethylene, or the like may be used.

As shown in FIGS. 3 and 4, the electrode lead wire 11 in battery 100 is drawn from the lithium ion battery 30 in the housing 20 (in the molded portion 21a) to the outside of the housing 20. The electrode lead wire 11 is fused to the sealant layer 204 of the housing 20 via the sealing film 1.

According to the battery 100, the electrode lead wire element 10 includes the above-described sealing film 1, and thus it is possible to prevent water from entering the housing from the outside. As a result, it is possible to realize a battery 100 which is less likely to deteriorate and is highly reliable.

Although the preferred embodiments of the present invention have been described above with reference to the accompanying drawings, the present disclosure is not limited to such embodiments. The various shapes and combinations and the like of the components shown in the above-mentioned examples are examples and can be variously changed on the basis of design requirements and the like without departing from the gist of the present invention. For example, the first adhesive layer and the second adhesive layer may contain a resin other than a polyolefin.

### Examples

The present invention is described below with reference to examples, but the present invention is not limited to these examples.

<Manufacture of sealing film>

A sealing film having a first adhesive layer, a base material layer, and a second adhesive layer laminated in this order was manufactured.

Specifically, raw material resins for each layer were separately heated and melted, and a multi-layer film was simultaneously formed using an extruder capable of simultaneous multi-layer extrusion molding, thereby obtaining a laminated body.

This laminated body was cut to a predetermined size to obtain sealing films of examples and a comparative example. The sealing film was formed in a band shape (width 15 mm, thickness 100 µm).

The constituent materials of the first adhesive layer, the base material layer, and the second adhesive layer are as follows:
- First adhesive layer: Maleic anhydride-modified polypropylene (melting point 140 °C) and an epoxy resin-based compound (The epoxy resin-based compound was the bisphenol A type novolac epoxy resin, trade name "EPICLON N-885", manufactured by DIC Corporation.)
- Base material layer: A polypropylene ICP (melting point 161 °C)
- Second adhesive layer: A random copolymer of propylene and ethylene (melting point 140 °C)

Contents of the epoxy resin-based compounds in the first adhesive layer, the base material layer, and the second adhesive layer are shown in Tables 1 and 2, respectively.

In Table 1, for example, in Example 1, the amount of the epoxy resin-based compound added to the first adhesive layer is 0.1%, with the remaining 99.9% being maleic anhydride-modified polypropylene. The same applies to the other examples and the comparative example.

The maleic anhydride-modified polypropylene is a polymer obtained by graft polymerizing maleic anhydride onto a random copolymer of propylene and ethylene.

The polypropylene ICP has an islands-in-a-sea structure in which second phases are dispersed in a first phase. The first phase is formed of homo PP. The second phase contains ethylene propylene rubber and polyethylene. The polypropylene ICP is a mixture containing PP, ethylene propylene rubber and polyethylene.

### <Manufacture of electrode lead wire>

An electrode lead wire comprising a lead wire main body and a surface treatment layer formed on its surface was manufactured. As the lead wire main body, nickel-plated copper foil having a rectangular shape of width 45 mm × length 52 mm was used.

### <Manufacture of laminated body for battery exterior packaging>

A PET film having a thickness of 12 µm, a nylon film having a thickness of 15 µm, aluminum foil having a thickness of 40 µm, and a PP film having a thickness of 80 µm were laminated through dry lamination to obtain a laminated body for battery exterior packaging.

The PET film, the nylon film, the aluminum foil, and the PP film correspond to the first film base material 201, the second film base material 202, the metal foil 203, and the sealant layer 204, respectively (see FIG. 4).

### <Measurement of adhesive strength to electrode lead wire>

The adhesive strength of the sealing film to the electrode lead wire was measured by the following method.

A laminated body was obtained by overlapping and boning the sealing film and the electrode lead wire by heat sealing. This laminated body was then cut into a band shape (width 10 mm × length 120 mm) to obtain a measurement specimen. The heat sealing conditions were: 180°C, 0.5 MPa, and 10 seconds.

The 180-degree peeling strength of this measurement specimen was measured using a testing machine (a desktop type precision universal testing machine: Autograph AGS-500NX, manufactured by Shimadzu Corporation) as follows:
The end portion of the sealing film and the end portion of the electrode lead wire were gripped by gripping parts of the testing machine, and the sealing film was peeled off from the electrode lead wire in a 180-degree peel test mode. A peeling speed was 50 mm/min.

When the peeling strength was 10 N/15 mm or more, the adhesive strength was determined to be "∘" (OK). When the peeling strength was less than 10 N/15 mm, the adhesive strength was determined to be "×" (NG). The results are shown in Tables 1 and 2.

### <Electrolytic solution resistance test>

The resistance of the sealing film to the electrolytic solution was evaluated as follows:
A packaging bag was manufactured using the laminated body for battery exterior packaging, and an electrolytic solution (DMC : EMC : EC = 4 : 3 : 3) containing LiPF₆ in an amount of 1.0 mol/L was introduced into the packaging bag. Pure water was added to the electrolytic solution in an amount of 0.2 mass % (2000 ppm).

The measurement specimen manufactured above was put in this packaging bag and immersed in the electrolytic solution. The measurement specimen in the packaging bag was kept in an oven at 85°C for 7 days. The peeling strength was then measured in the same manner as in <Measurement of adhesive strength to electrode lead wire>.

When the peeling strength was 10 N/10 mm or more, the electrolytic solution resistance was determined to be "∘" (OK). When the peeling strength was less than 10 N/10 mm, the electrolytic solution resistance was determined to be "×" (NG). The results are shown in Table 1.

**[Table 1]**

| | | Comparative Example 1 | Example 1 | Example 2 | Example 3 | Example 4 | Example 5 |
|---|---|---|---|---|---|---|---|
| Thickness [µm] | First adhesive layer | 50 | 50 | 50 | 50 | 50 | 50 |
| | Base material layer | 40 | 40 | 40 | 40 | 40 | 40 |
| | Second adhesive layer | 10 | 10 | 10 | 10 | 10 | 10 |
| | Total thickness | 100 | 100 | 100 | 100 | 100 | 100 |
| Epoxy addition amount in each layer [%] | First adhesive layer | 0.0 | 0.1 | 1.0 | 3.0 | 5.0 | 10.0 |
| | Base material layer | 0.0 | 0.0 | 0.0 | 0.0 | 0.0 | 0.0 |
| | Second adhesive layer | 0.0 | 0.0 | 0.0 | 0.0 | 0.0 | 0.0 |
| Epoxy addition amount in sealing film [%] | | 0.00 | 0.05 | 0.50 | 1.50 | 2.50 | 5.00 |
| Adhesive strength | | OK | OK | OK | OK | OK | OK |
| Electrolytic solution resistance | | NG | OK | OK | OK | OK | OK |

**[Table 2]**

| | | Example 6 | Example 7 | Example 8 | Example 9 | Example 10 | Example 11 | Example 12 |
|---|---|---|---|---|---|---|---|---|
| Thickness [µm] | First adhesive layer | 50 | 50 | 50 | 30 | 30 | 50 | 50 |
| | Base material layer | 40 | 40 | 40 | 40 | 40 | 40 | 40 |
| | Second adhesive layer | 10 | 10 | 10 | 30 | 30 | 10 | 10 |
| | Total thickness | 100 | 100 | 100 | 100 | 100 | 100 | 100 |
| Epoxy addition amount in each layer [%] | First adhesive layer | 15.0 | 0.1 | 10.0 | 0.1 | 10.0 | 0.0 | 0.0 |
| | Base material layer | 0.0 | 0.0 | 0.0 | 0.0 | 0.0 | 0.1 | 10.0 |
| | Second adhesive layer | 0.0 | 0.1 | 10.0 | 0.1 | 10.0 | 0.0 | 0.0 |
| Epoxy addition amount in sealing film [%] | | 7.50 | 0.06 | 6.00 | 0.06 | 6.00 | 0.04 | 4.00 |
| Adhesive strength | | OK | OK | OK | OK | OK | OK | OK |
| Electrolytic solution resistance | | OK | OK | OK | OK | OK | OK | OK |

As shown in Tables 1 and 2, it is considered that in Comparative Example 1, since the first adhesive layer did not contain the epoxy resin-based compound, the adhesive strength of the sealing film to the electrode lead wire could not be maintained when the first adhesive layer was in contact with the electrolytic solution.

In contrast, it was found that in Examples 1 to 12, the adhesive strength of the sealing film to the electrode lead wire was high and the sealing film had resistance to the electrolytic solution.

Among Examples 1 to 12, in Examples 1 to 5 and 7 to 12, each layer had a uniform thickness when simultaneous multi-layer extrusion molding was performed, which facilitated the efficient manufacture of a multi-layer film.

### REFERENCE SIGNS LIST

1 Sealing film
2 First adhesive layer
3 Second adhesive layer
4 Base material layer
10 Electrode lead wire element
11 Electrode lead wire (first base body)
20 Housing (second base body)
30 Lithium ion battery (battery cell)
100 Battery

## Claims

1. A sealing film for sealing between a metal first base body and a second base body, the sealing film comprising:
a first adhesive layer that adheres to the first base body;
a second adhesive layer that adheres to the second base body; and
a base material layer provided between the first adhesive layer and the second adhesive layer,
wherein the first adhesive layer mainly contains an acid-modified polyolefin, and
the sealing film contains an epoxy resin-type compound.

2. The sealing film according to claim 1, wherein a content of the epoxy resin-type compound on the basis of the total resin amount of the sealing film is 0.05 mass % or more and 6 mass % or less.

3. The sealing film according to claim 1 or 2, wherein the first adhesive layer contains an epoxy resin-type compound.

4. The sealing film according to any one of claims 1 to 3, wherein the first adhesive layer contains the epoxy resin-type compound in an amount of 0.1 mass % or more and 10 mass % or less on the basis of the total resin amount of the first adhesive layer.

5. The sealing film according to any one of claims 1 to 4, wherein the second adhesive layer contains an acid-modified polyolefin and an epoxy resin-type compound.

6. The sealing film according to any one of claims 1 to 5, wherein the base material layer contains a polyolefin and an epoxy resin-type compound.

7. The sealing film according to any one of claims 1 to 6,
wherein the first adhesive layer contains an acid-modified polypropylene and an epoxy resin-type compound,
the base material layer contains polypropylene, and
the second adhesive layer contains polypropylene or an acid-modified polypropylene.

8. An electrode lead wire element comprising:
the sealing film as defined in any one of claims 1 to 7; and
the first base body, which is an electrode lead wire extending in one direction.

9. A battery comprising:
the electrode lead wire element as defined in claim 8;
a battery cell to which the electrode lead wire is connected; and
the second base body, which is a housing enclosing the battery cell.
